Europäisches Patentamt

European Patent Office

Office européen des brevets

(19)

(11) Numéro de publication : **0 383 755 B1**

(12) **FASCICULE DE BREVET EUROPEEN**

(45) Date de publication du fascicule du brevet :
**10.06.92 Bulletin 92/24**

(51) Int. Cl.[5] : **B65G 65/46**

(21) Numéro de dépôt : **88902149.9**

(22) Date de dépôt : **23.02.88**

(86) Numéro de dépôt international :
**PCT/FR88/00101**

(87) Numéro de publication internationale :
**WO 89/08067 08.09.89 Gazette 89/21**

(54) **DISPOSITIF HELICOIDAL D'EXTRACTION DE MATERIAU PARTICULAIRE HORS D'UN RESERVOIR.**

(43) Date de publication de la demande :
**29.08.90 Bulletin 90/35**

(45) Mention de la délivrance du brevet :
**10.06.92 Bulletin 92/24**

(84) Etats contractants désignés :
**AT BE CH DE FR GB IT LI LU NL SE**

(56) Documents cités :
**EP-A- 0 016 685**
**DE-A- 1 918 698**
**FR-A- 1 376 898**
**FR-A- 2 067 127**
**FR-A- 2 603 568**

(73) Titulaire : **TAUPIN, Jean-Paul**
**Moulin du Vivier**
**F-58130 Urzy (FR)**

(72) Inventeur : **TAUPIN, Jean-Paul**
**Moulin du Vivier**
**F-58130 Urzy (FR)**

(74) Mandataire : **Ropital-Bonvarlet, Claude**
**Cabinet BEAU DE LOMENIE, 51, avenue**
**Jean-Jaurès**
**F-69007 Lyon (FR)**

Jouve, 18, rue Saint-Denis, 75001 PARIS

# Description

## DOMAINE TECHNIQUE :

L'invention concerne un dispositif d'extraction d'un matériau particulaire, c'est-à-dire pulvérulent ou granuleux, hors d'un réservoir, notamment d'un silo.

Le domaine technique concerné est celui de l'extraction mécanique de tels matériaux à partir d'un organe d'extraction de type hélicoïdal.

## TECHNIQUE ANTERIEURE :

La technique antérieure connaît deux familles de tels organes d'extraction.

La première famille se rapporte aux dispositifs comprenant au moins une vis rigide disposée, au moins partiellement, parallèlement au fond ou à la base d'un réservoir. La vis est animée d'un mouvement de rotation sur elle-même et d'un déplacement angulaire de balayage autour d'un axe, généralement perpendiculaire au plan du fond ou de la base.

L'extraction s'effectue par entraînement et évacuation du produit en direction d'une sortie occupant, le plus souvent, le centre du fond.

Les dispositifs de cette famille ne donnent pas entière satisfaction pour différentes raisons. Ils sont, généralement, onéreux d'achat et d'entretien et représentent des structures encombrantes. La vis constitue un organe rigide comportant une âme, de section non négligeable, constituant un frein à la progression en déplacement angulaire au sein de la masse de matériau. La structure rigide de la vis et sa section exigent l'application d'un couple d'entraînement de forte valeur, dés la mise en rotation et, par suite, la mise en oeuvre de moyens de motorisation de grande puissance et coûteux. Les moyens de support de la vis, nécessairement mis en oeuvre, ont pour résultat de placer la vis à distance du fond ou de la base du réservoir. La vis est ainsi incapable de racler une couche minimale de produit qui subsiste en permanence sur le fond du réservoir. De plus, une vis rigide ne permet pas, en raison de sa structure, de fournir des dosages variables en dessous d'un dosage minimal déterminé.

La seconde famille concerne les dispositifs comprenant un organe extracteur en forme d'enroulement filaire hélicoïdal. L'objet de l'invention se rapporte, spécifiquement, aux dispositifs de cette seconde famille.

L'art antérieur fournit plusieurs propositions de réalisation de dispositifs extracteurs se rapportant à cette seconde famille.

L'une d'elles est enseignée par le brevet **FR 1 376 898** prévoyant une enceinte de stockage comportant, à distance du fond, un enroulement filaire hélicoïdal, rectiligne, occupant une position fixe et entraîné en rotation sur son axe. Un tel dispositif présente l'inconvénient de ne pas pouvoir être adapté aux réservoirs de forme cylindrique, généralement retenus pour le stockage de produits ou matériaux pulvérulents ou granuleux. Un autre inconvénient de ce dispositif réside dans l'impossibilité d'extraire toute la masse de produits ou matériaux hors du réservoir, en raison de l'établissement et du support de l'enroulement à distance du fond.

Une autre proposition a été faite par la demande **EP-A 0 016 685** prévoyant de ménager une gorge annulaire périphérique ouverte dans le fond plat d'un réservoir. Un enroulement filaire hélicoïdal est logé dans la gorge dans laquelle il peut être animé d'une rotation sur son axe par un organe moteur adapté à l'une de ses extrémités. L'enroulement filaire selon cet enseignement n'assume, en fait, qu'une {onction de reprise car l'extraction proprement dite est assurée par un racleur tournant dans un plan parallèle au fond du réservoir.

Un tel dispositif met en oeuvre deux moyens distincts de raclage-extraction et de soutirage exigeant deux moyens d'entraînement en rotation et deux systèmes de contrôle et d'asservissement. En outre, un tel dispositif a pour inconvénient de laisser subsister sur le fond plat du réservoir une couche ou galette de produits ou matériaux dont l'épaisseur est égale à la distance séparant le fond du plan de rotation du racleur tournant.

Il convient de citer, également, la demande **DE-A 19 18 698** prévoyant de prolonger le fond tronconique d'un réservoir par une conduite coudée dans laquelle est disposé un enroulement filaire hélicoïdal mû en rotation sur son axe. La partie terminale de l'enroulement s'élève sensiblement verticalement à l'intérieur du fond tronconique occupé par le produit ou matériau particulaire.

Un tel dispositif présente plusieurs inconvénients. Le premier tient au fait que sa mise en oeuvre ne peut être envisagée pour des réservoirs à fond plat. Le second réside dans l'inefficacité d'extraction attachée à une telle proposition. En effet, peu aprés la mise en rotation, la partie terminale de l'enroulement filaire se ménage, au sein de la masse de produit pulvérulent ou granuleux, un logement à l'intérieur duquel elle se centre. La tendance naturelle du produit ou voûtage ou à l'auto-compaction s'oppose à l'effondrement et, par suite, la rotation de la partie terminale s'effectue à l'intérieur du logement qu'elle a créé sans produire l'extraction.

## EXPOSE DE L'INVENTION :

La présente invention a pour objet un nouveau dispositif d'extraction, du type à enroulement filaire hélicoïdal, congru pour :
- assumer une extraction efficace d'un produit particulaire hors d'un réservoir,
- être adaptable à toute forme de fond de réservoir de structure générale de révolution,

– permettre l'extraction complète d'une masse de produit particulaire sans laisser subsister de couche ou galette sur le fond,

– être simple, robuste, fiable et d'entretien nul,

– ne faire intervenir qu'un seul moyen de motorisation.

Pour atteindre les objectifs ci-dessus, le dispositif selon l'invention, du type comprenant au moins un organe d'extraction, du type filaire, en forme d'enroulement hélicoïdal relié à une extrémité à un moteur d'entraînement en rotation sur l'axe général dudit organe qui s'étend à proximité d'une paroi d'appui appartenant au réservoir, est caractérisé en ce que cet organe :

– est associé à des moyens aptes à l'animer d'un déplacement angulaire autour d'un axe de balayage traversant la paroi d'appui,

– possède au moins une partie terminale de type filaire s'étendant au moins en partie selon une direction radiale par rapport à l'axe de balayage,

– et se trouve astreint à coopérer avec et à suivre la paroi d'appui pendant son déplacement angulaire.

Diverses autres caractéristiques ressortent de la description faite ci-dessous en référence aux dessins annexés qui montrent, à titre d'exemples non limitatifs, des formes de réalisation de l'objet de l'invention.

**BREVE DESCRIPTION DES DESSINS** :

La **fig. 1** représente, en coupe schématique partielle verticale, un premier mode de réalisation de l'objet de l'invention.

La **fig. 2** représente, en coupe schématique partielle verticale, un deuxième mode de réalisation.

La **fig. 3** représente, en coupe schématique de dessus, un troisième mode de réalisation.

La **fig. 4** représente, en coupe schématique partielle, un quatrième mode de réalisation.

La **fig. 5** représente une coupe schématique partielle prise selon la ligne **V-V** de la **fig. 4**.

La **fig. 6** représente, en vue schématique de dessus, un autre mode de réalisation.

**MEILLEURE MANIERE DE REALISER L'INVENTION** :

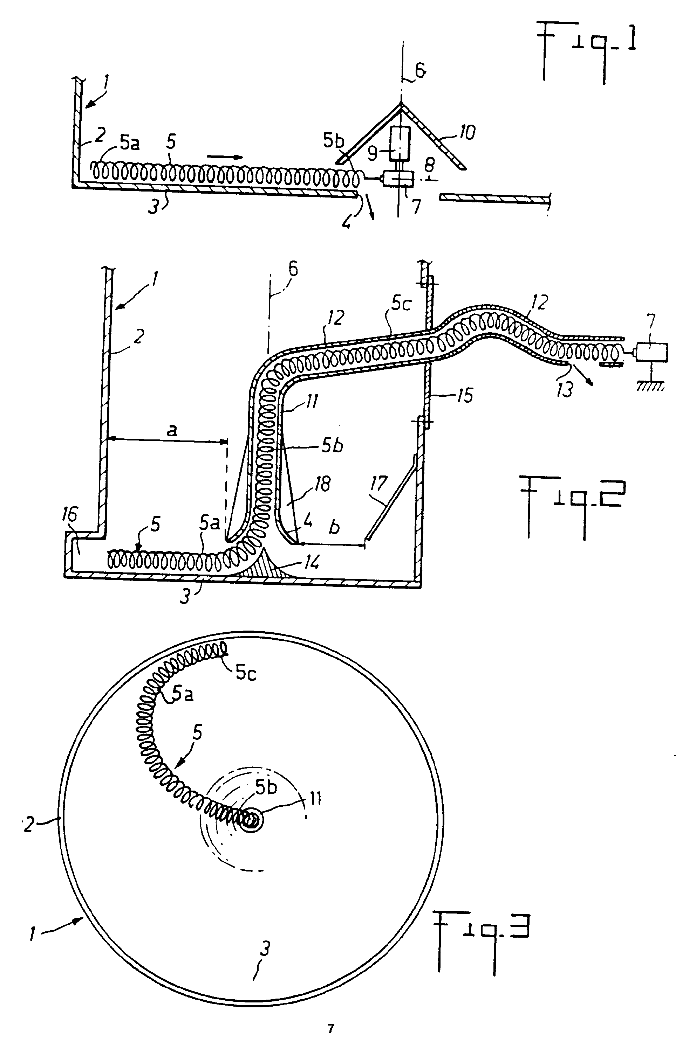

La **fig. 1** montre, partiellement, un réservoir de stockage **1** comprenant une paroi latérale cylindrique **2** et une base ou un fond **3** au centre duquel est prévue une ouverture d'évacuation **4** reliée à des dispositifs de réception non représentés.

Le dispositif d'extraction selon l'invention comprend un enroulement filaire hélicoïdal **5**, de toute section appropriée, de préférence souple en flexion, s'étendant au moins en partie radialement par rapport à l'axe **6** du réservoir en reposant sur le fond de ce dernier. L'enroulement **5** possède une première partie terminale **5a** libre et une seconde **5b** liée à un moteur **7** d'entraînement en rotation sur l'axe **8** de l'enroulement. Le moteur **7** est associé à des moyens **9** d'entraînement de l'enroulement **5** en balayage angulaire sur l'axe **6**. Un chapeau **10**, de préférence de forme conique, protégé les moyens d'entraînement **7** et **9**.

La rotation de l'enroulement **5** sur son axe **8**, combinée au déplacement de balayage angulaire en appui sur le fond **3**, draine le matériau particulaire ensilé dans le réservoir, dans le sers de la flèche en direction de l'ouverture **4**, le sens de rotation de l'enroulement **5** sur son axe étant choisi à cet effet en fonction du sens du pas de l'enroulement.

La mise en oeuvre d'un enroulement filaire, de nature souple et de disposition au moins en partie radiale, permet de réaliser un entraînement en rotation s'appliquant au démarrage spire après spire. Le couple, s'exerçant sur la prise de puissance de l'enroulement, s'établit ainsi progressivement, ce qui permet de mettre en oeuvre un moteur **7** de puissance inférieure à celle qui serait nécessaire pour l'entraînement d'un organe hélicoïdal du type vis. L'application progressive du couple permet aussi de supprimer les risques de rupture.

La nature souple de l'enroulement **5**, qui peut être assimilé à un ressort hélicoïdal, permet, en outre, de réaliser une extraction efficace du matériau à partir d'un fond **3** de réservoir de toute forme appropriée. Cette faculté est intéressante car elle permet la mise en oeuvre du dispositif pour tous types d'applications nécessitant que le fond **3** présente une forme adaptée, telle qu'un entonnoir convexe, concave, conique, etc.

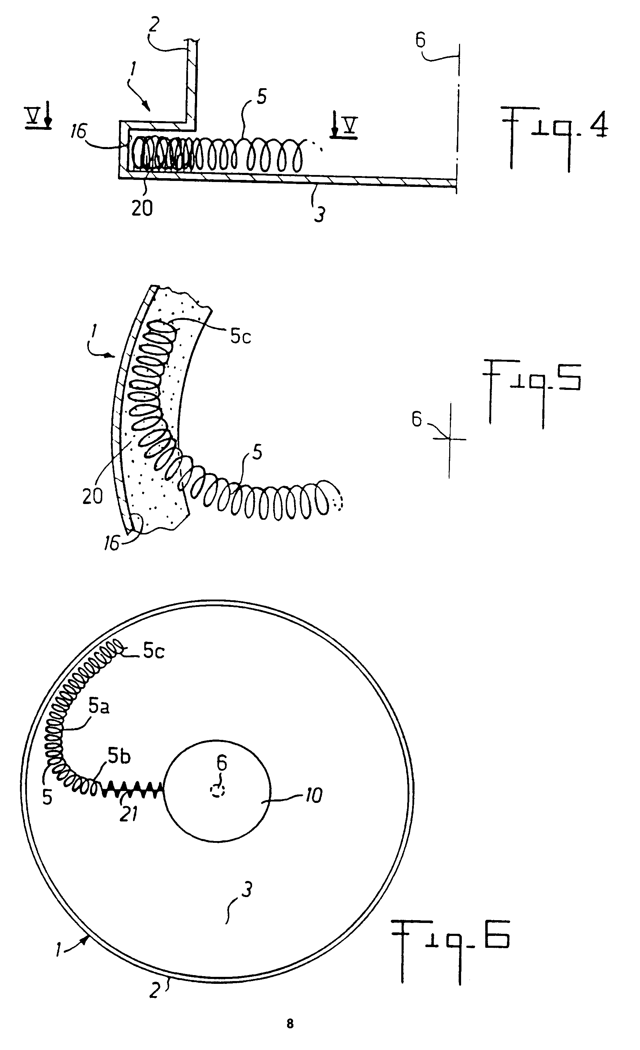

La **fig. 2** illustre une variante de réalisation selon laquelle le réservoir **1** comporte un tube **11** vertical coaxial à l'axe central **6** et qui débouche par une ouverture **4** en forme de trompette au-dessus de la base **3**, laquelle comporte avantageusement une forme mâle tronconique curviligne **14** complémentaire de l'ouverture **4**. Le tube **11** se prolonge vers le haut par une section **12** qui sort du réservoir au travers d'une platine **15** fixée de manière amovible sur une ouverture latérale du réservoir. Le tube **11** comporte, à l'extérieur du réservoir et après un parcours plus ou moins compliqué tenant compte des conditions d'implantation, un orifice d'évacuation **13** par gravité. La section de prolongement **12** peut être souple, au moins partiellement.

L'organe hélicoïdal souple **5** comporte une partie radiale de balayage **5a**, une partie axiale d'entraînement **5b** et une partie de prolongement **5c** raccordée au moteur **7**.

Pour tenir compte de l'allongement ou du raccourcissement de l'enroulement **5** en fonction de sa charge, le bas de la paroi latérale **2** peut être pourvu d'un logement horizontal périphérique **16** (mode de réalisation représenté sur la partie gauche de la **fig. 2**) ou recouvert d'un déflecteur **17** périphérique en entonnoir (partie droite de la **fig. 2**).

L'évasement du bas du tube **11** est recouvert extérieurement par une forme tronconique **18** de pente suffisante pour permettre l'écoulement naturel du produit à extraire.

Le diamètre de l'enroulement **5**, son pas et la section du fil peuvent varier le long de l'enroulement.

Les diamètres respectifs de l'enroulement **11** et de son prolongement **12** sont choisis pour permettre la libre rotation sur lui-même de l'enroulement **5** avec un jeu adapté au matériau particulier. Le pas de l'enroulement **5**, la forme et les dimensions transversales du fil le constituant, sont adaptés au débit à atteindre, au couple à transmettre et au matériau particulier.

Le fonctionnement du dispositif est le suivant. A vide, l'enroulement **5** entraîné par le moteur **7** roule librement, au niveau de sa partie radiale **5a** sur la base **3**, autour de l'axe **6**.

En charge, quand le réservoir est rempli au moins partiellement de matériau particulier, la rotation radiale de la partie **5** est freinée par la masse du matériau et s'effectue seulement au fur et à mesure que le matériau est arasé par chaque spire de la partie **5a** en rotation, aidé en cela par son appui sur le fond du silo. Ceci entraîne ce matériau vers le tube en trompette **11**, puis de là, à travers le prolongement **12**, jusqu'à l'évacuation **13**.

A chaque tour complet de la base du réservoir **1**, la partie **5a** couvre la totalité de la surface apparente de la base **3** et empêche tout voûtage du matériau, car la distance **a** depuis la paroi latérale **2** à la base du tube **11**, ou bien la distance **b** depuis le bas de l'entonnoir **17** jusqu'à la base du tube **11**, est choisie supérieure b la distance maximum de voûtage du matériau.

Un dispositif inverse pourrait être envisagé consistant à faire sortir le tube **11** par la base **3** avec une paroi de raccordement à l'ouverture **4** de la base, de préférence, à génératrice curviligne.

La **fig. 3** montre un développement pouvant être mis en oeuvre avec les exemples de réalisation ci-dessus. Selon ce développement, la partie terminale **5a** posséde un prolongement **5c**, de longueur telle qu'il soit contraint à former une portion recourbée dans la direction de balayage angulaire, en prenant appui, en partie, contre la paroi périphérique **2**. Le prolongement **5c** est de longueur suffisante pour que la condition ci-dessus soit respectée, quelles que soient les variations de longueur de l'enroulement en fonction de la charge qu'il subit et que le rayon de courbure imposé permette la rotation sur lui-même de l'enroulement.

La rotation sur lui-même de l'enroulement **5** entraîne le vissage du prolongement **5c** dans la masse du matériau créant, par réaction, une composante de force tangentielle permettant de provoquer l'entrainement de l'enroulement **5** en balayage angulaire autour de l'axe **6**.

La longueur du prolongement **5c**, son diamètre et celui du fil le constituant, le pas et le sens du pas, sont déterminés pour, qu'en fonction du matériau à extraire, le prolongement **5c** puisse se visser dans le matériau.

Le sens de rotation de l'enroulement **5** et du prolongement **5c**, par rapport à la paroi **2** sur laquelle il s'appuie, est choisi en fonction du sens du pas, de manière que l'enroulement **5** soit astreint à se plaquer contre le fond **3**.

Selon le développement des **fig. 4** et **5,** il est avantageux de prévoir, notamment mais non exclusivement dans le cas où la paroi périphérique **2** délimite le logement annulaire **16**, de disposer, à la périphérie du fond **3**, un élément de réaction **20** apte à coopérer avec le prolongement **5c** pour favoriser sa progression et son action d'entraînement en déplacement de l'enroulement **5** en balayage angulaire du fond **3**. L'élément de réaction **20** consiste en un revêtement local offrant un état de surface dans lequel les spires du prolongement **5c** peuvent se prendre et se visser. Un état de surface, convenant particulièrement bien à cet effet, est constitué par des poils, pointes, picots, fibres ou bouclettes semi-rigides pour offrir une réaction suffisante pour provoquer la progression du prolongement **5c** tout en pouvant s'effacer élastiquement en cas de surcharge imposée à l'enroulement.

La **fig. 6** montre une variante de réalisation consistant à réaliser un organe extracteur au moyen d'un enroulement filaire hélicoïdal répondant aux caractéristiques ci-dessus et adapté en bout d'un segment radial de vis rigide **21** lié aux aryens d'entraînement **7** et **9** de la réalisation selon la **fig. 1** par exemple.

**APPLICATION INDUSTRIELLE :**

L'invention trouve une application industrielle particulièrement avantageuse dans l'extraction de farine à partir de réservoirs.

**Revendications**

1. Dispositif hélicoïdal d'extraction d'un matériau particulaire hors d'un réservoir, du type comprenant au moins un organe d'extraction, du type filaire (5) en forme d'enroulement hélicoïdal, relié à une extrémité à un moteur (7) d'entrainement en rotation sur l'axe général (8) dudit organe qui s'étend à proximité d'une paroi d'appui (3) appartenant au réservoir (1), caractérisé en ce que cet organe :

   – est associé à des moyens aptes à l'animer d'un déplacement angulaire autour d'un axe de balayage (6) traversant la paroi d'appui,
– possède au moins une partie terminale de type filaire s'étendant au moins en partie selon une direction radiale par rapport à l'axe de balayage,
– et se trouve astreint à coopérer avec et à suivre la paroi d'appui pendant son déplacement angulaire.

2. Dispositif hélicoïdal d'extraction selon la revendication 1, caractérisé en ce que les moyens capables de l'animer d'un déplacement angulaire sont constitués par un groupe moto-réducteur (7) d'entrainement positif.

3. Dispositif hélicoïdal d'extraction selon la revendication 1, caractérisé en ce que les moyens capables de l'animer d'un déplacement angulaire comprennent le moteur (7) d'entraînement en rotation de l'organe sur son axe, un conduit tubulaire (11) contenant, au moins en partie, l'organe et une surface de raccordement entre le conduit et la paroi d'appui.

4. Dispositif hélicoïdal d'extraction selon la revendication 1, caractérisé en ce que l'organe possède une partie terminale (5c) recourbée dans le sens du déplacement angulaire qui lui est imposé et coopérant en appui avec la partie de la paroi périphérique (2) du réservoir se raccordant à la paroi d'appui.

5. Dispositif hélicoïdal d'extraction selon la revendication 4, caractérisé en ce que la partie terminale de l'organe coopére avec des moyens l'astreignant à suivre la paroi d'appui au cours de son déplacement angulaire.

6. Dispositif hélicoïdal d'extraction selon la revendication 5, caractérisé en ce que les moyens comprennent un retour (16) présenté par la paroi périphérique du réservoir et s'étendant, partiellement au moins, de façon sensiblement parallèle à la paroi d'appui pour délimiter avec elle une sorte de logement annulaire ouvert dans lequel la partie terminale (5c) est engagée.

7. Dispositif hélicoïdal d'extraction selon la revendication 5 ou 6, caractérisé en ce que les moyens comprennent un élément de réaction (21) porté par la paroi du réservoir pour coopérer avec la partie terminale.

8. Dispositif hélicoïdal d'extraction selon la revendication 7, caractérisé en ce que l'élément de réaction comporte des fibres, poils ou picots permettant à la partie terminale de s'y visser.

**Patentansprüche**

1. Spiralförmige Einrichtung für die Extraktion eines Teilchenmaterials aus einem Behälter, wobei diese Einrichtung von einem Typ ist, der wenigstens ein Extraktionselement eines drahtartigen, die Form einer Spiralwicklung besitzenden Typs (5) umfaßt, das mit einem Ende mit einem Motor (7) für den Drehantrieb um eine in der Nähe einer zum Behälter (1) gehörigen Abstützwand (3) sich erstreckende Hauptachse (8) des Elementes verbunden ist, dadurch gekennzeichnet, daß dieses Element:
– mit Mitteln verbunden ist, die dazu geeignet sind, es zu einer Winkelverschiebung um eine die Abstützwand durchsetzende Kehrachse (6) anzuregen,
– wenigstens einen drahtartigen Abschlußteil besitzt, der sich wenigstens teilweise in radialer Richtung in bezug auf die Kehrachse erstreckt,
– und gezwungen ist, während seiner Winkelverschiebung mit der Abstützwand zusammenzuwirken und dieser zu folgen.

2. Spiralförmige Extraktionseinrichtung gemäß Anspruch 1, dadurch gekennzeichnet, daß die Mittel, die sie zu einer Winkelverschiebung anregen können, von einer Getriebemotorgruppe (7) mit positivem Antrieb gebildet werden.

3. Spiralförmige Extraktionseinrichtung gemäß Anspruch 1, dadurch gekennzeichnet, daß die Mittel, die sie zu einer Winkelverschiebung anregen können, den Motor (7) für den Drehantrieb des Elementes um seine Achse, eine rohrförmige Leitung (11), die wenigstens teilweise das Element enthält, und eine Fläche für die Vereinigung der Leitung mit der Abstützwand umfassen.

4. Spiralförmige Extraktionseinrichtung gemäß Anspruch 1, dadurch gekennzeichnet, daß das Element einen Abschlußteil (5c) besitzt, der in Richtung der ihm aufgezwungenen Winkelverschiebung gekrümmt ist und mit dem an die Abstützwand anschließenden Teil der Umfangswand (2) des Behälters durch Anliegen an diesem zusammenwirkt.

5. Spiralförmige Extraktionseinrichtung gemäß Anspruch 4, dadurch gekennzeichnet, daß der Abschlußteil des Elementes mit den einen Zwang auf ihn ausübenden Mitteln so zusammenwirkt, daß er im Verlauf seiner Winkelverschiebung der Abstützwand folgt.

6. Spiralförmige Extraktionseinrichtung gemäß Anspruch 5, dadurch gekennzeichnet, daß die Mittel einen Rücksprung (16) umfassen, der in der Umfangswand des Behälters vorhanden ist und sich wenigstens teilweise im wesentlichen parallel zur Abstützwand erstreckt, um mit dieser eine Art von ringförmigem offenen Aufnahmesitz zu begrenzen, in den der Abschlußteil (5c) eingreift.

7. Spiralförmige Extraktionseinrichtung gemäß Anspruch 5 oder 6, dadurch gekennzeichnet, daß die Mittel ein Reaktionselement (21) umfassen, das von der Wand des Behälters getragen wird, um mit dem Abschlußteil zusammenzuwirken.

8. Spiralförmige Extraktionseinrichtung gemäß Anspruch 7, dadurch gekennzeichnet, daß das Reaktionselement Fasern, Haare oder Zähne aufweist, die sich um den Abschlußteil wickeln können.

## Claims

1. Helicoidal device for extracting a material in particle form from a reservoir, of the type comprising at least one extraction member, of the filiform type (5), in the form of a helicoidal winding, connected at one end to a motor (7) for driving in rotation on the general axis (8) of said member which extends near a support wall (3) belonging to the reservoir (1), characterized in that this member :
   - is associated with means adapted to animate it in an angular displacement about an axis of sweep (6) traversing the support wall,
   - presents at least one terminal part of filiform type extending at least in part in a radial direction with respect to the axis of sweep,
   - and is obliged to cooperate with and follow the support wall during its angular displacement.

2. Helicoidal extraction device according to claim 1, characterized in that the means capable of animating it in an angular displacement are constituted by a positive-drive gear-reduction unit (7).

3. Helicoidal extraction device according to claim 1, characterized in that the means capable of animating it in an angular displacement comprise the motor (7) for driving the member in rotation on its axis, a tubular conduit (11) containing, at least in part, the member and a surface for connection between the conduit and the support wall.

4. Helicoidal extraction device according to claim 1, characterized in that the member presents a terminal part (5c) curved in the direction of the angular displacement which is imposed thereon and cooperating in abutment with the part of the peripheral wall (2) of the reservoir connected to the support wall.

5. Helicoidal extraction device according to claim 4, characterized in that the terminal part of the member cooperates with means obliging it to follow the support wall during its angular displacement.

6. Helicoidal extraction device according to claim 5, characterized in that the means comprise a return (16) presented by the peripheral wall of the reservoir and extending, at least partially, in manner substantially parallel to the support wall in order to define therewith a sort of open annular housing in which the terminal part (5c) is engaged.

7. Helicoidal extraction device according to claim 5 or 6, characterized in that the means comprise a reaction element (21) borne by the wall of the reservoir to cooperate with the terminal part.

8. Helicoidal extraction device according to claim 7, characterized in that the reaction element comprises fibers, bristles or barbs allowing the terminal part to screw therein.

Fig.1

Fig.2

Fig.3

Fig.4

Fig.5

Fig.6